# EUROPÄISCHE PATENTSCHRIFT

(11) **EP 2 082 817 B1**
(45) Veröffentlichungstag und Bekanntmachung des Hinweises auf die Patenterteilung: **11.07.2012**
(21) Anmeldenummer: 09006436.1
(22) Anmeldetag: 25.02.2005
(51) Int. Cl.: B09B 3/00

(54) **Verfahren zur Verwertung von Flüssigkristall-Displays**
Method for recycling liquid crystal displays
Procédé de recyclage d'écrans à cristaux liquides

(30) Priorität: 05.03.2004 DE 102004011389; 27.04.2004 DE 102004020739; 17.06.2004 DE 102004029136
(43) Veröffentlichungstag der Anmeldung: 29.07.2009
(62) Teilanmeldung aus: 05715523.6
(73) Patentinhaber: Merck Patent GmbH, 64293 Darmstadt (DE)
(72) Erfinder: Martin, Roland, 69469 Weinheim (DE)

(56) Entgegenhaltungen:
- DE-A1- 4 030 732
- JP-A- 2000 084 531
- MARTIN R. ET AL.: "Verwertungsverfahren für LC-Displays" INTERNET ARTICLE, [Online] 12. Mai 2004 (2004-05-12), XP002331049 BERLIN Gefunden im Internet: URL:http://www.displayforum.de/download/na chhaltigkeit/06_Martin_Verwertungsverfahre n_LCDs.pdf> [gefunden am 2005-06-08]

## Beschreibung

Die vorliegende Erfindung betrifft ein Verfahren zur Verwertung von Flüssigkristall-Displays (LCD's = Liquid Crystal Displays).

Die Anzahl der hergestellten LCD's sowie die mittlere Display-Fläche pro Display nimmt seit Jahren kontinuierlich zu. Da LCD's seit kurzem auch in TV-Geräten eingesetzt werden, ist auch in den kommenden Jahren mit deutlichen Wachstumsraten zu rechnen.

Obwohl es sich bei den wichtigsten LCD-Anwendungen, wie z.B. in Notebooks, Bildschirmen und TV-Geräten, um langlebige Produkte handelt, spielt die Entsorgung beziehungsweise die Verwertung eine immer wichtigere Rolle. Die in der Vergangenheit übliche Beseitigung durch Deponierung der Elektronik-Bauteile wird zunehmend durch Verwertungsverfahren ersetzt. Dies insbesondere auch im Hinblick auf die EU-Direktive 2002/96/EC betreffend "Waste Electrical and Electronic Equipment" ("WEEE"), wonach LCD's ausgebaut und entsorgt bzw. verwertet werden müssen.

Für die Verwertung bestehen dabei drei unterschiedliche Alternativen:
1. Das LCD wird aufgearbeitet und die Einzelkomponenten werden für das Originalprodukt wiederverwertet (z.B. Wiederaufarbeitung der Flüssigkristalle bzw. des Glases und deren Verwendung zur Herstellung von neuen LCD's).
2. Das LCD wird aufgearbeitet und die Einzelkomponenten finden in anderen Industrien oder für andere Produkte Verwendung.
3. Einzelne Bauteile, vorzugsweise ausgebaute Bauteile, der LCD's werden energetisch verwertet. In diesem Fall dient beispielsweise die Verbrennung der Kunststoffe der Energiegewinnung.

Die Verwertung von LCD-Glas zur Herstellung von neuen LCD's wird beispielsweise in der JP 2001/305501 A, der JP 2001/305502 A, der JP 2000/024613 A und der JP 2001/337305 A beschrieben. Nachteilig an dieser Art der Verwertung ist, dass das Glas immer OberflächenVerunreinigungen enthält und zusätzlich noch sortenrein gesammelt werden muß, was sowohl mit einem hohen technischen als auch mit einem hohen finanziellen Aufwand verbunden ist, da für unterschiedliche Anwendungen generell auch unterschiedliche Gläser eingesetzt werden. So werden beispielsweise für STN (Super Twisted Nematic)-LCD's im allgemeinen Natron-Kalk-Gläser eingesetzt, die im allgemeinen im Bereich von 1000°C schmelzen, während für TFT (Thin Film Transistor)-LCD's im allgemeinen Borosilikat-Gläser Verwendung finden, die im allgemeinen im Bereich von 1300°C schmelzen.

Ein spezielles Verfahren zur Entsorgung von LCD's betreibt die Berliner Firma "VICOR" in einer Pilotanlage, bei dem die Displays manuell von Gehäuse- und Elektronikteilen sowie den Polarisationsfolien getrennt und anschließend auf eine Größe von etwa 1 cm geschreddert werden (EDV, Elektronikschrott, Abfallwirtschaft 1993, S. 231-241). In einem Ofen werden dann die Flüssigkristalle in einer Stickstoff-Argon-Atmosphäre bei maximal 400°C und Normaldruck abdestilliert. Nach deren Kondensation in einer Kältefalle, gelangen sie zur Endlagerung in eine Untertage-Deponie. Die Ofentemperatur darf bei der Behandlung 600°C nicht überschreiten, da sonst aufgrund der Molekülstruktur die Gefahr der Dioxinbildung besteht. Die anderen anfallenden Materialfraktionen Glas, Kunststoff und Leiterplatten sowie Bauelemente werden über übliche Recyclingwege weiterverarbeitet. Nachteilig an diesem Verfahren ist, dass die Abtrennung der Flüssigkristalle, die zum einen nur einen sehr geringen Gewichtsanteil am gesamten Display ausmachen (etwa 1 kg Flüssigkristalle pro Tonne Displays) und zum anderen noch ein Gemisch aus einer Vielzahl von unterschiedlichen Einzelsubstanzen darstellen, sowohl technisch als auch finanziell sehr aufwändig ist, zumal die Flüssigkristalle anschließend deponiert werden. Eine Verwendung der zurückgewonnenen Flüssigkristalle in neuen LCD's ist nach heutigem Stand der Technik unwirtschaftlich. Das trifft auch für ein weiteres Verfahren zur Extraktion von Flüssigkristallen mit Lösungsmitteln zu, das in der JP 2002/126688 A beschrieben wird.

Die Kunststoffe, wie beispielsweise Gehäuseteile aber auch Polarisationsfolien und andere Folien, werden im allgemeinen abgetrennt und entweder energetisch verwertet oder finden Verwendung für andere Produkte. Das thermische Recycling solcher Kunststoffe wird z.B. in der JP 2002/159955 A beschrieben.

Auch die Verwendung der Einzelkomponenten für andere Produkte ist bekannt. So benutzt die "Straßburger Aufbereitungsgesellschaft" in Hockenheim (SAG) ein Verfahren um LCD's zu Schaumglas zu blähen (Diplom-Arbeit: "Recyclingverfahren für Flüssigkristalldisplays", Prof. Dr. Paffrath, Prof. Dr. Schön, Dipl.lng. Scala, TU-Darmstadt, 1997-98). Die verwendeten Anzeigen stammen dabei hauptsächlich vom Ausschuß aus der Produktion. Sie werden inklusiv der LC-Flüssigkeit mit Flachglas und Geräteglas vermischt, geschreddert, auf eine Korngröße von 40 µm staubfein gemahlen und mit einem Blähmittel vermengt. Anschließend werden bei 800 bis 850°C Schaumglaskügelchen von etwa 5 bis 15 mm Durchmesser gebläht. Das fertige Material hat Ähnlichkeit mit dem bekannten Blähton aus Hydrokulturen und ist verwendbar als Leichtzuschlagsstoff, als Füllstoff, als Wärmedämmmaterial, als Träger-Granulat oder als Absorptionsmaterial in der Bauindustrie, im Garten- und Landschaftsbau sowie in der Abwassertechnik.

Weitere Verfahren zur Entfernung der Polarisationsfolie durch mechanische Entfernung, Verbrennung oder Vergasung, mit anschließender Zerkleinerung der Gläser und deren Verwendung als Glasersatz werden in der JP 2001/296508 A und der JP 2001/296509 A beschrieben. Der Nachteil dieser Verfahren liegt darin, dass die daraus erhaltenen Gläser stark verunreinigt sind und in der Zusammensetzung stark differieren. Deshalb sind sie nur für minderwertige Anwendungen einsetzbar.

So wird in der JP 2000/084531 A ein Verfahren zur Verwertung von LCD's beschrieben, bei dem die LCD's zunächst zerkleinert werden, und zwar auf Teilchengrößen von weniger als 10 mm. Anschließend werden die derart zerkleinerten Teilchen bei 1200°C in Schmelzöfen zur Entfernung von Eisen eingesetzt. Nachteilig an diesem Verfahren ist insbesondere die aufwändige Zerkleinerung der LCD's auf Teilchengrößen von weniger als 10 mm sowie der eingeschränkte Einsatz auf die Entfernung von Eisen.

Darüber hinaus nimmt der Energieverbrauch kontinuierlich zu und es werden weltweit große Anstrengungen unternommen, Energie einzusparen. Insbesondere bei der industriellen Produktion ist man bemüht durch Verfahrensvereinfachungen, Wärmerückgewinnungen und/oder durch den Ersatz von Rohstoffen insbesondere die Kosten und/oder den Energieverbrauch zu reduzieren.

Ausgehend von dem bekannten Stand der Technik war es daher eine der Aufgaben der vorliegenden Erfindung nach wirtschaftlichen Verfahren zur Verwertung von LCD's zu suchen, die nicht die aus dem Stand der Technik bekannten Nachteile aufweisen. Insbesondere sollte die aufwändige Abtrennung der Flüssigkristalle und/oder der Polarisationsfolien sowie die aufwändige Sortierung der Displays nach unterschiedlichen Glassorten, unter Berücksichtigung der Energieeffizienz des Verfahrens, vermieden werden. Eine weitere Aufgabe der vorliegenden Erfindung war es, neue Verwendungsmöglichkeiten für LCD's bereitzustellen.

Überraschenderweise wurde gefunden, dass es möglich ist, LCD's in einem einfachen und zudem wirtschaftlichen Verfahren stofflich zu verwerten.

Gegenstand der vorliegenden Erfindung ist somit ein Verfahren zur stofflichen Verwertung von LCD's bei dem die LCD's als Roh- und/oder Zuschlagsstoff in Drehrohröfen in einem Temperaturbereich von 1100 bis 1300°C thermisch behandelt werden und zur Ausbildung eines Schutzfilmes auf der inneren Auskleidung der Drehrohröfen führen.

Unter einem LCD wird in der vorliegenden Anmeldung ein Display verstanden, das neben den zwei Glasplatten zumindest noch die zwischen den beiden Glasplatten angeordneten Materialien, wie z.B. Flüssigkristalle, transparente Folien und Klebstoffe, enthält, sowie mit dem Display verbundene Elektronik-Bauteile (z.B. Elektroden) enthalten kann. Die Kunststoff-Gehäuse, die Hintergrundbeleuchtungen sowie gegebenenfalls die Polarisatorfolien werden in der Regel vorher abgetrennt und separat verwertet. Sie können aber auch bei dem erfindungsgemäßen Verfahren direkt mitverwertet werden.

LCD's bestehen im wesentlichen aus 30 bis 99,8 Gew.-% Glas und 0 bis 60 Gew.-% Kunststofffolie, sowie 0,1 bis 20 Gew.-% an Elektronik und Flüssigkristallen.

Bei dem erfindungsgemäßen Verfahren werden als LCD's vorzugsweise gebrauchte LCD's sowie LCD's aus dem Ausschuß aus der Produktion eingesetzt.

Unter thermischer Behandlung wird in der vorliegenden Anmeldung die Behandlung von LCD's unter Energiezufuhr durch Energieträger, wie z.B. Gas, Kohle und Öl, und/oder unter Ausnutzung der in den LCD's vorhandenen Heizenergie verstanden. Die thermische Behandlung erfolgt dabei in Drehrohröfen.

In einer ersten bevorzugten Ausführungsform werden die LCD's unzerkleinert eingesetzt. Vorteilhaft an dieser Ausführungsform ist, dass auf die Zerkleinerung der LCD's verzichtet werden kann, die sowohl mit einem zusätzlichen technischen Aufwand als auch mit zusätzlichen Kosten verbunden ist. In einer zweiten bevorzugten Ausführungsform werden die LCD's zerkleinert. Die Art und Größe der Zerkleinerung ist dabei jedoch unkritisch. So können die LCD's entweder gebrochen, geschreddert oder gemahlen werden. In Abhängigkeit von der Art der Zerkleinerung liegt die mittlere Größe der Bruchstücke dabei im Bereich von Dezimetern (beim Brechen), im Bereich von Zentimetern (beim Schredderen) und im Bereich von Millimetern (beim Mahlen).

Vorteilhaft an dem erfindungsgemäßen Verfahren ist, dass die aufwändige Abtrennung der Flüssigkristalle überflüssig ist und dass gleichzeitig die Gefahr der Bildung von giftigen Produkten, wie z.B. Dioxin, vermieden wird, da bei den hohen Temperaturen des erfindungsgemäßen Verfahrens sämtliche organischen Produkte zerstört werden.

Ein weiterer Vorteil des erfindungsgemäßen Verfahrens ist, dass das Ausgangsmaterial in gemahlener, geschredderter, gebrochener und/oder unzerkleinerter Form eingesetzt werden kann.

Darüber hinaus handelt es sich bei dem erfindungsgemäßen Verfahren um ein wirtschaftliches Verfahren, bei dem zudem noch eine stoffliche sowie gegebenenfalls zusätzlich noch eine zumindest teilweise thermische Verwertung der LCD's stattfindet.

Die erfindungsgemäße stoffliche sowie die gegebenenfalls zusätzliche, zumindest teilweise thermische Verwertung kann dabei in der erfindungsgemäßen Ausführungsform durchgeführt werden.

In der erfindungsgemäßen Ausführungsform werden die LCD's als Roh-und/oder Zuschlagsstoff in Drehrohröfen in einem Temperaturbereich von 1100 bis 1300°C, vorzugsweise 1150 bis 1250°C, thermisch behandelt. Die thermische Behandlung der LCD's in Drehrohröfen führt dabei zur Ausbildung eines Schutzfilmes auf deren innerer Auskleidung.

Der Anteil der LCD's als Roh- und/oder Zuschlagsstoff in der Gesamtzusammensetzung liegt dabei vorzugsweise im Bereich von 1 bis 20 Gew.-%.

Drehrohröfen haben im allgemeinen eine Schamotte-Auskleidung, die durch aggressive Gase und Stoffe bei der Verbrennung von Industriemüll angegriffen wird. Folglich müssen diese Schamotte-Steine in regelmäßigen Abständen erneuert werden. Durch Zusatz von silikathaltigen Produkten, wie z.B. Sand, ist es möglich einen Schutzfilm auf den Wandungen auszubilden, der die Lebensdauer der Schamotte-Auskleidung deutlich verlängert.

Überraschenderweise wurde nun gefunden, dass anstelle der silikathaltigen Produkte auch LCD's verwendet werden können und ebenfalls zur Ausbildung eines Schutzfilmes auf der Schamotte-Auskleidung führen. Auf diese Weise ist es möglich, in den Drehrohröfen LCD's als Ersatzstoffe für zugekaufte, silikathaltige Produkte, wie z.B. Schmelzsände, einzusetzen. Der Einsatz der LCD's führt auch in dieser Ausführungsform zu einer Reduzierung der notwendigen Energie, da auch in dieser Ausführungsform der Heizwert der Kunststofffolien mitgenutzt werden kann, um das LCD-Glas aufzuschmelzen.

Als LCD's werden vorzugsweise gebrauchte LCD's sowie LCD's aus dem Ausschuß aus der Produktion eingesetzt.

Die vorliegende Erfindung wird im folgenden anhand eines Ausführungsbeispiels näher beschrieben, ohne dadurch jedoch beschränkt zu werden.

### Beispiel (Industriemüll-Verbrennungsanlage)

Es werden 176 (120 I) Fässer mit jeweils ca. 100 kg LCD's, d.h. insgesamt ca. 18 t an LCD's eingesetzt. Die LCD's liegen dabei zumeist in unzerbrochener Form, d.h. in Größen von 10 bis 50 cm Durchmesser, vor. Das Gemisch besteht dabei aus etwa 70% TFT-LCD's und etwa 30% STN-LCD's. Teilweise ist noch die Elektronik an den LCD's vorhanden. Die LCD's stammen dabei im wesentlichen von Elektro-Recycling-Unternehmen, die die LCD's ausgebaut, gesammelt und gelagert haben.

In einem großen Industriemüll-Drehrohr-Verbrennungsofen mit einem Durchmesser von 3,5 m und einer Länge von 11 m wird der zu verbrennende Industriemüll, wie z.B. Säuren, verunreinigte organische Lösungsmittel oder auch Feststoffe mit Gas bei Temperaturen von ca. 1200 bis 1300°C verbrannt. Der in den Fässern vorliegende Industriemüll und die LCD's werden mittels einem Greifer in den oberen Teil des Ofens eingebracht. Da der Ofen stetig auf einer Temperatur von 1200 bis 1300°C gehalten wird, platzen die Fässer umgehend beim Einbringen auf. Die LCD's werden kontinuierlich über einen Zeitraum von 24 Stunden anstelle der ansonsten verwendeten silizium- oder silikathaltigen Substanzen, wie Schmelzsand oder Glas, eingebracht. Die silizium- oder silikathaltigen Substanzen bilden einen schützenden Schlackepelz (= Schutzschicht) auf der Ausmauerung des Drehrohrofens und schützen dadurch die Wandung gegen Verätzung und schnelle Abnutzung. Die Güte des schützenden Schlackepelzes wird visuell begutachtet. Der durch die in den Verbrennungsofen eingebrachten LCD's gebildete Schlackepelz unterscheidet sich nicht von dem Schlackepelz, der durch die sonst üblicherweise eingesetzten silizium- oder silikathaltigen Substanzen gebildet wird.

## Patentansprüche

1. Verfahren zur stofflichen Verwertung von LCD's bei dem die LCD's als Roh- und/oder Zuschlagsstoff in Drehrohröfen in einem Temperaturbereich von 1100 bis 1300°C thermisch behandelt werden und zur Ausbildung eines Schutzfilmes auf der inneren Auskleidung der Drehrohröfen führen.

2. Verfahren gemäß Anspruch 1, **dadurch gekennzeichnet, dass** die LCD's ganz oder teilweise silikathaltige Verbindungen ersetzen.

## Claims

1. Process for the material recycling of LCDs, in which the LCDs, as raw material and/or aggregate, are thermally treated in rotary-tube furnaces in a temperature range from 1100 to 1300°C and result in the formation of a protective film on the inner lining of the rotary-tube furnaces.

2. Process according to Claim 1, **characterised in that** the LCDs completely or partially replace silicate-containing compounds.

## Revendications

1. Procédé pour le recyclage de matériaux de LCD, dans lequel les LCD, en tant que matériau brut et/ou agrégat, sont traités thermiquement dans des fours à tube tournant dans une plage de températures de 1100 à 1300°C et conduisent à la formation d'un film de protection sur le gainage interne des fours à tube tournant.

2. Procédé selon la revendication 1, **caractérisé en ce que** les LCD remplacent complètement ou partiellement des composés contenant du silicate.
